# EUROPEAN PATENT APPLICATION

(11) **EP 3 210 950 A1**
(43) Date of publication of application: **30.08.2017**
(21) Application number: 16461506.4
(22) Date of filing: 26.02.2016
(51) Int. Cl.: C04B 28/10, B28C 7/16, B28C 9/00, B28C 5/12, C04B 111/28

(54) **PROCESS FOR MANUFACTURING A PLASTER WITH HIGH THERMAL INSULATION CONTAINING AEROGEL AND A SYSTEM FOR REALIZING THIS PROCESS**

(71) Applicant: Gerwill sp. z o.o., 27-202 Starachowice (PL)
(72) Inventor: Tognon, Francesco, 35100 Padova (IT)
(74) Representative: Dobrzanski, Jan Pawel

(57) **Abstract**

The present invention relates to a process for manufacturing aerogel-containing plaster, which consists in:
- mixing an agglomerate containing water, an inert material, calcium hydroxide and additives, in a solution containing an aerogel in a suspension,
- emulsifying such formed mixture of the solution with the aerogel,
- confectioning such formed hydrated emulsion containing the aerogel into standard commercial containers, such as buckets and/or PVC bags designed for transporting.

## Description

The aim of the invention is to develop a process for manufacturing aerogel-containing plaster.

The object of the invention is also a technological line for the process for manufacturing aerogel-containing plaster.

Currently, materials which are delivered to the construction site in ready-to-use form are commonly used in order to accelerate their use and improve thermal properties of the outer walls of buildings, facade coatings, ceilings and floors, wherein the thickness of the coatings used constitutes an important factor when selecting a technical solution and insulating materials, depending on their thermal insulation, flexibility, vapour permeability, fire resistance, speed and ease of application, practicality in the application, as well as the method of use, and costs.

Currently, the most common insulation materials are mineral wool and hydrocarbon derivatives, i.e. polystyrenes and polyurethanes, which, to achieve satisfactory insulation values, require a substantial thickness of the material used, constituting a clearly detrimental factor in the internal insulations. A further negative factor of polystyrenes is their flammability, toxicity, relatively rapid loss of properties, including the thermal ones, costly recycling, etc.

For these reasons, despite the widespread distribution of these typical insulation materials, their characteristics do not meet expectations of the market which is still looking for more preferable technical solutions that could ensure ease of use, significantly better thermal insulation parameters, total fire resistance, resistance to aggressive atmospheric factors, vapour permeability, total recycling and minimal thicknesses.

In order to meet the above requirements, the present inventor has already developed a thermal insulation panel for use in construction, described and submitted as the Italian patent application PD2012A000039, which is characterised in that, within the layers of glass fibre, an insulating material partly consisting of an aerogel is contained.

In particular, between the layers of fibre, a mat of raw material impregnated with an aerogel is introduced in form of a film and/or panels containing an aerogel currently offered on the market.

To improve parameters of the above product, the present inventor has developed a process for manufacturing an aerogel mat impregnated with an aerogel, described and submitted as the Italian patent application PD20120065.

The aim of the present invention is to develop a method for manufacturing a plaster for use in construction, containing an aerogel, to be applied by plastering methods, including manual ones and with plastering machines, for use as external coatings of walls, ceilings, facades and floors, appropriate to be stored in silos and to be packaged in PVC bags and bucket-type containers, in a form ready for using at the construction site.

Within this task, the aim of the invention is to develop a process for manufacturing a plaster or an emulsion, for use in construction and in other fields of economy requiring the use of insulation materials having high insulation parameters and minimal thicknesses of the insulation material.

Another aim of the invention is to develop a process allowing the use of the product directly on construction site by using known and widely used devices for applying plasters and similar materials.

This aim has been achieved in the process for manufacturing aerogel-containing plaster, which consists in:
- emulsifying an inert raw material with calcium hydroxide, water and natural additives, and an aerogel solution in a suspension
- manufacturing a plaster by bringing the emulsion containing the aerogel solution to water balance in a constant process
- storing in silos and confectioning in containers appropriate for storage and distribution and for easy application at a construction site.

Other characteristics and advantages of the invention are shown in the following description of the most preferred embodiment, wherein it does not exclude any method for manufacturing and is described in an indicative form and not limiting the product manufacturing process and the relevant production line, according to the description of the invention.

In reference to the description, the process for manufacturing an aerogel-containing emulsion according to the invention includes the following actions:
- mixing an inert product with water, calcium hydroxide and additives in an aerogel-containing solution
- water balancing of the emulsion with the aerogel solution, thereby producing a plaster
- storing in silos and confectioning on an automatic packaging line into bags and containers ready for distribution and application at a construction site.

The aerogel-containing emulsion in a suspension consists of water, an inert material, additives and calcium hydroxide, wherein mixing thereof in a controlled environment allows maintaining the required water balance.

The process assumes that the mixing phase and the emulsifying phase constitute a phase for inducing balance for the stabilisation of products and for recovery of excess aerogel solution.

The next phase of the process is heating the emulsion at a temperature between 50 and 70°C.

The process according to the invention results in that the emulsion charged with an aerogel in a solution form, wherein the aerogel is present in a suspension, can be used in form of plaster with high insulation properties and can be confectioned in bags or containers and is easy to use at a construction site for external and internal plastering of buildings.

The line for the above process and for obtaining the product described in the invention is described below.

This line consists of a container for the emulsion, a vat for the solution with centrifugally profiled mixers placed therein so that the flow path of the emulsion is possibly the longest along the outer walls of the vat. Thus, a vat of a smaller volume can be used.

The emulsification proceeds from the first mixer, along a second guiding mixer, to the third and final mixer.

The balancing phase is realised by a pair of mixers driven by an electric motor.

The heating phase takes place in a climatic chamber. The climatic chamber has inner walls which due to the movement given by the mixers induce movement from the top to the bottom and vice versa.

Thus, a climatic chamber is formed of a limited volume, yet still capable of inducing a sufficiently long movement of the emulsion in the heating phase for ensuring the predetermined water balance.

The climatic chamber is provided with technical means for heating the emulsion with an aerogel. They can be constituted, for example, by radiative panels or electrical resistors placed at the walls of the climatic chamber, or high frequency heating devices, or the like.

Heating devices of the climatic chamber are associated with commonly used drying / controlled-dehumidification devices.

The line also comprises a device for separating ingredients of the emulsion with an aerogel, so as to improve adhesion of the plaster during application thereof, depending on various conditions of the application.

It has been found and verified in practice that the invention meets the objectives set.

In particular, the invention constitutes a process for manufacturing aerogel-containing emulsion, in form of plaster confectioned in bags or containers, and is suitable for use as an insulation material in buildings.

Furthermore, the invention constitutes a process for manufacturing a new insulation material for use not only in the construction industry, but also in all the situations, where it is necessary to obtain high insulation parameters with limited thickness of the insulation material used.

Additionally, a technological line based on known technologies has been created together with the product. Such developed invention may be realised in a variety of variants and modifications, all of which are within the innovative concept of the invention. Furthermore, all the details may be replaced by other elements which constitute their technical equivalents.

In practice, the materials used, as long as they are compatible with the specific application and fit within the shapes and sizes, can be freely interchangeable, depending on the needs and state of the art.

Wherever technical features mentioned in the claims relate to specific characteristics, these specific characteristics are provided only for better understanding of the description of claims, and as a result these specific characteristics do not have any attributes limiting the interpretation of the characteristics of the invention and realise only an informative function.

## Claims

1. A process for manufacturing aerogel-containing plaster, which consists in:
- formation of an agglomerate containing water, an inert material, calcium hydroxide and additives, in a solution containing an aerogel in a suspension,
- emulsifying such formed mixture of the solution with the aerogel,
- confectioning such formed aerogel-containing emulsion into standard commercial containers, such as buckets or PVC bags designed for transporting.

2. The process according to claim 1, **characterised in that** the emulsion containing an aerogel in the form of a solution, wherein the aerogel constitutes a suspension, is ready to use in form of plaster having high insulation properties and is confectioned into buckets and bags, easy to use at a construction site for plastering buildings, both externally and internally.

3. The process according to the preceding claims, **characterised in that** the solution constitutes an emulsion containing an aerogel with water, an inert material, calcium hydroxide and additives, brought to the state of water balance which allows stabilisation of ingredients and recovery of any excess of the aerogel and other ingredients.

4. The process according to the preceding claims, **characterised in that** a phase of heating the emulsion takes place in a climatic chamber, using known technologies.

5. A technological line for the process according to the preceding claims, **characterised in that** it includes a vat with the above emulsion, a set of two mixers, a heating climatic chamber, containing emulsion: water, an inert material, calcium hydroxide, additives and an aerogel.

6. The technological line according to the preceding claim, **characterised in that** the climatic chamber has inner walls which, in combination with appropriate guiding mixers, define a helicoid mixing path extending from the top to the bottom and vice versa.

7. The technological line according to the preceding claim, **characterised in that** the vat has guiding mixers therein able to guide the mixing path longer than the length of the vat.

8. The technological line according to the preceding claim, **characterised in that** the silo for storing the emulsion is followed by a distributor for the emulsion to be confectioning, which allows for interchangeability of confectioning into bags or buckets.
